# EUROPEAN PATENT APPLICATION

(11) **EP 4 686 702 A1**
(43) Date of publication of application: **04.02.2026**
(21) Application number: 25186965.7
(22) Date of filing: 02.07.2025
(51) Int. Cl.: C01D 7/10, C01D 15/08

(54) **MANUFACTURING METHOD FOR RECYCLED CARBON MATERIAL**

(30) Priority: 30.07.2024 JP 2024123237
(71) Applicant: Prime Planet Energy & Solutions, Inc., Chuo-ku, Tokyo 103-0022 (JP)
(72) Inventor: HOSOE, Kento, Tokyo, 103-0022 (JP)
(74) Representative: Kuhnen & Wacker Patent- und Rechtsanwaltsbüro PartG mbB

(57) **Abstract**

A method of easily obtaining a recycled carbon material by removing more Li from a carbon-based negative electrode active material containing Li is provided. A manufacturing method for a recycled carbon material according to the present disclosure includes: a first thermal process step of thermally processing a carbon-based negative electrode active material containing Li together with ethylene carbonate at a temperature less than a boiling point of ethylene carbonate to obtain a thermally processed object containing lithium ethylene dicarbonate; and a second thermal process step of thermally processing the thermally processed object at a temperature more than or equal to the boiling point of ethylene carbonate to convert lithium ethylene dicarbonate into lithium carbonate.

## Description

### TECHNICAL FIELD

The present disclosure relates to a manufacturing method for a recycled carbon material.

### BACKGROUND

Lithium ion secondary batteries have been widely used as a power source for driving a vehicle, a portable power source, and the like in various fields. In recent years, promotion of recycling of used lithium ion secondary batteries has been demanded from the viewpoint of SDGs. In examples of such recycling, used lithium ion secondary batteries are separated into each material and collected (for example, see Patent Document 1 and Patent Document 2).

On the other hand, as described in Patent Document 1 and Patent Document 2, a carbon-based negative electrode active material such as graphite has been known as a negative electrode active material of a lithium ion secondary battery.

### CITATION LIST

### PATENT DOCUMENTS

Patent Document 1: Japanese Patent Application Publication No. 2019-169309
Patent Document 2: Japanese Translation of PCT International Application Publication No. 2022-547698

### SUMMARY

In the conventional art, a firing process, an acid leaching process, and the like are performed to recycle the used lithium ion secondary batteries. On the other hand, the carbon-based negative electrode active material of the used lithium ion secondary battery contains lithium (Li). Li contained in this carbon-based negative electrode active material mostly remains in the carbon-based negative electrode active material because the carbon-based negative electrode active material and lithium cannot be separated completely in the firing process or the acid leaching process. Therefore, a problem occurs in that mixing of lithium limits the application when the collected carbon-based negative electrode active material is used as a recycled carbon material. Thus, development of a technique to easily remove Li from the carbon-based negative electrode active material has been demanded.

In view of this, an object of the present disclosure is to provide a method for easily obtaining a recycled carbon material by removing more Li from a carbon-based negative electrode active material containing Li.

A manufacturing method for a recycled carbon material according to the present disclosure includes: a first thermal process step of thermally processing a carbon-based negative electrode active material containing Li together with ethylene carbonate at a temperature less than a boiling point of ethylene carbonate to obtain a thermally processed object containing lithium ethylene dicarbonate; and a second thermal process step of thermally processing the thermally processed object at a temperature more than or equal to the boiling point of ethylene carbonate to convert lithium ethylene dicarbonate into lithium carbonate.

With such a constitution, a recycled carbon material can be easily obtained by removing more Li from the carbon-based negative electrode active material containing Li.

### BRIEF DESCRIPTION OF THE DRAWINGS

FIG. 1 is a flowchart expressing each step of a manufacturing method for a recycled carbon material according to the present disclosure;
FIG. 2 is a longitudinal cross-sectional view schematically illustrating an internal structure of one example of a lithium ion secondary battery including a carbon-based negative electrode active material containing Li used in the manufacturing method for a recycled carbon material according to the present disclosure;
FIG. 3 is a schematic exploded view illustrating a structure of an electrode body of the lithium ion secondary battery illustrated in FIG. 2; and
FIG. 4 is a schematic cross-sectional view of a negative electrode of the lithium ion secondary battery illustrated in FIG. 2.

### DETAILED DESCRIPTION

Embodiments of the present disclosure will hereinafter be described with reference to the drawings. Matters that are not mentioned in the present specification and that are necessary for the implementation of the present disclosure can be grasped as design matters of those skilled in the art based on the prior art in the relevant field. The present disclosure can be implemented on the basis of the contents disclosed in the present specification and common technical knowledge in the relevant field. It should be noted that in the drawings below, the members and parts with the same operation are explained by being denoted by the same reference sign. In addition, the size relation (length, width, thickness, etc.) in each drawing does not necessarily reflect the actual size relation. Moreover, in the present specification, the numerical range expressed as "A to B" includes A and B.

It should be noted that the term "secondary battery" in this specification refers to an electrical energy storage device capable of being charged and discharged repeatedly. It should be noted that, in the present specification, the term "lithium ion secondary battery" refers to a secondary battery that uses lithium ions as a charge carrier and can be charged and discharged by transfer of charges accompanying with the lithium ions between positive and negative electrodes.

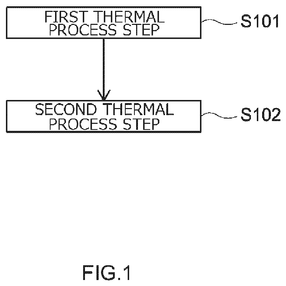

As expressed in FIG. 1, a manufacturing method for a recycled carbon material according to the present disclosure includes, as necessary steps, a first thermal process step S101 of thermally processing a carbon-based negative electrode active material containing Li together with ethylene carbonate (hereinafter may be abbreviated as "EC") at a temperature less than the boiling point of ethylene carbonate to obtain a thermally processed object containing lithium ethylene dicarbonate, and a second thermal process step S102 of thermally processing the thermally processed object at a temperature more than or equal to the boiling point of ethylene carbonate to convert lithium ethylene dicarbonate into lithium carbonate. Each step will be described below in detail.

### <First thermal process step>

First, the first thermal process step S101 is described. The carbon-based negative electrode active material containing Li is typically a carbon-based negative electrode active material collected from a used lithium ion secondary battery. That is to say, the carbon-based negative electrode active material containing Li is typically a negative electrode active material of a used lithium ion secondary battery. The carbon-based negative electrode active material containing Li is desirably a negative electrode active material of a lithium ion secondary battery that was used as a power source for driving a vehicle because the amount of use of active material is large and the demand for recycling is particularly high. The carbon-based negative electrode active material containing Li is, however, not limited to this. In another example, the carbon-based negative electrode active material containing Li may be a negative electrode active material of a lithium ion secondary battery that is not shipped because of a defect in manufacture.

In a case of charging a lithium ion secondary battery, lithium ions are stored in the carbon-based negative electrode active material. In a case where the lithium ion secondary battery is charged and discharged repeatedly, lithium ions can be precipitated as metal lithium on a surface of the carbon-based negative electrode active material. Alternatively, when the carbon-based negative electrode active material is collected from the lithium ion secondary battery, lithium ions contained in an electrolyte can adhere to the surface of the carbon-based negative electrode active material. Therefore, the carbon-based negative electrode active material collected from the lithium ion secondary battery can contain Li in this manner. That is to say, Li contained in the carbon-based negative electrode active material may be Li stored in the carbon-based negative electrode active material, Li precipitated on the surface of the carbon-based negative electrode active material, Li adhering to the surface of the carbon-based negative electrode active material, or the like.

Examples of the carbon-based negative electrode active material include graphite, hard carbon, soft carbon, and the like. Graphite is desirable in particular. Graphite may be either natural graphite or artificial graphite, and may be amorphous carbon-coated graphite in which graphite is covered with an amorphous carbon material.

The carbon-based negative electrode active material typically has a median diameter (D50) of for example 0.1 µm or more and 50 µm or less, desirably 1 µm or more and 25 µm or less, and more desirably 5 µm or more and 20 µm or less; however, the median diameter is not limited to these. The median diameter (D50) of the carbon-based negative electrode active material can be determined by, for example, a laser diffraction scattering method.

In the first thermal process step S101, the carbon-based negative electrode active material containing Li is thermally processed together with EC at a temperature less than the boiling point of EC. The boiling point of EC is 244°C and therefore, the thermal process temperature in the first thermal process step S101 is less than 244°C.

By this thermal process, EC and Li contained in the carbon-based negative electrode active material are subjected to a reaction expressed by the following Formula (I); thus, a thermally processed object containing lithium ethylene dicarbonate ((CH₂OCO₂Li)₂) is obtained.

2(CH₂O)₂CO + 2Li → (CH₂OCO₂Li)₂ + C₂H₄ (I)

From the viewpoint of efficiently performing the reaction expressed by Formula (I) above, the thermal process temperature in the first thermal process step S101 is desirably 90°C or more, more desirably 100°C or more, and still more desirably 110°C or more. From the viewpoint of suppressing the evaporation of EC before the reaction between EC and Li contained in the carbon-based negative electrode active material progresses sufficiently, the thermal process temperature in the first thermal process step S101 is desirably 220°C or less, more desirably 170°C or less, and still more desirably 140°C or less.

The thermal process time in the first thermal process step S101 may be determined as appropriate in accordance with the thermal process temperature. The thermal process time in the first thermal process step S101 is for example 30 minutes to 72 hours, desirably 40 minutes to 24 hours, and more desirably 50 minutes to 6 hours.

The thermal process in the first thermal process step S101 is performed desirably at 90°C to 220°C for 30 minutes to 72 hours, more desirably at 100°C to 170°C for 40 minutes to 24 hours, and still more desirably at 110°C to 140°C for 50 minutes to 6 hours.

It should be noted that in a case where water exists in an atmosphere, a side reaction such as a reaction between Li and water may be caused. Therefore, the first thermal process step S101 is desirably performed in a dry atmosphere (for example, dry air atmosphere, inert gas atmosphere, or the like). The first thermal process step S101 can be performed using a known heating device.

### <Second thermal process step S102>

In the second thermal process step S102, the thermally processed object obtained in the first thermal process step is thermally processed at a temperature more than or equal to the boiling point of ethylene carbonate. The boiling point of EC is 244°C and therefore, the thermal process temperature in the second thermal process step S102 is 244°C or more.

By this thermal process, lithium ethylene dicarbonate contained in the thermally processed object obtained in the first thermal process step and Li contained in the carbon-based negative electrode active material are subjected to a reaction expressed by the following Formula (II), thereby converting lithium ethylene dicarbonate into lithium carbonate.

(CH₂OCO₂Li)₂ + 2Li → 2Li₂CO₃ + C₂H₄ (II)

From the viewpoint of efficiently performing the reaction expressed by Formula (II) above, the thermal process temperature in the second thermal process step S102 is desirably 250°C or more, more desirably 255°C or more, and still more desirably 260°C or more. In addition, the thermal process temperature in the second thermal process step S102 is desirably 350°C or less, more desirably 320°C or less, and still more desirably 290°C or less.

The thermal process time in the second thermal process step S102 may be determined as appropriate in accordance with the thermal process temperature. The thermal process time in the second thermal process step S102 is for example 30 minutes to 72 hours, desirably 40 minutes to 24 hours, and more desirably 50 minutes to 6 hours.

The thermal process in the second thermal process step S102 is performed desirably at 250°C to 350°C for 30 minutes to 72 hours, more desirably at 255°C to 320°C for 40 minutes to 24 hours, and still more desirably at 260°C to 290°C for 50 minutes to 6 hours.

It should be noted that in a case where water exists in an atmosphere, a side reaction such as a reaction between Li and water may be caused. Therefore, the second thermal process step S102 is desirably performed in a dry atmosphere (for example, dry air atmosphere or inert gas atmosphere). The second thermal process step S102 can be performed using a known heating device.

Regarding a specific implementation method of the first thermal process step S101 and the second thermal process step S102, a first embodiment to a third embodiment will be hereinafter described as examples.

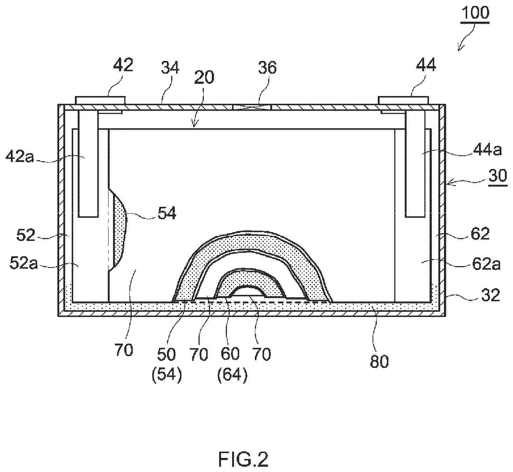

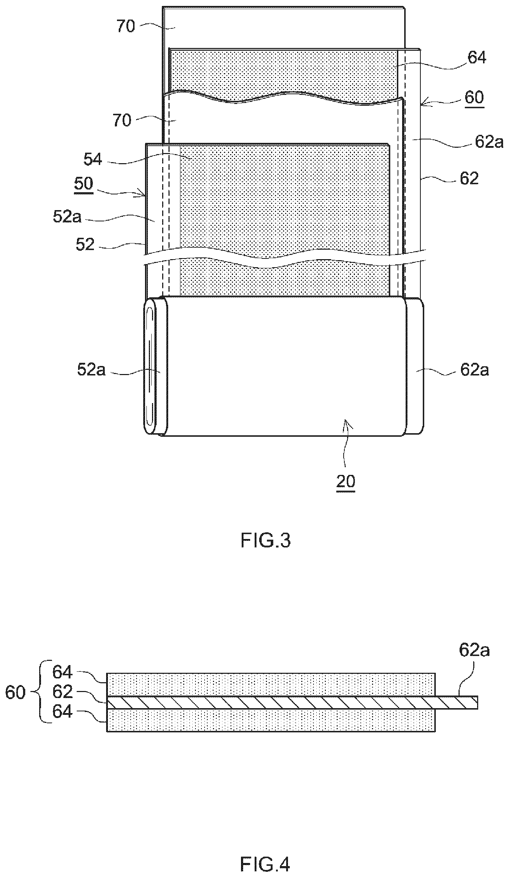

First, an example of a structure of the lithium ion secondary battery is shown in FIG. 2 and FIG. 3. FIG. 2 is a longitudinal cross-sectional view schematically illustrating an internal structure of one example of the lithium ion secondary battery including the carbon-based negative electrode active material containing Li used in the manufacturing method for a recycled carbon material according to the present disclosure. FIG. 3 is an exploded view schematically illustrating an electrode body of the lithium ion secondary battery illustrated in FIG. 2. FIG. 4 is a schematic cross-sectional view of a negative electrode of the lithium ion secondary battery illustrated in FIG. 2 taken along a thickness direction.

As illustrated in FIG. 2, a lithium ion secondary battery 100 is a sealed battery in which an electrode body 20 with a flat shape and a nonaqueous electrolyte 80 are accommodated inside a battery case 30. As illustrated in FIG. 2, the battery case 30 includes an exterior body 32 that accommodates the electrode body 20, and a lid body 34 that seals an opening of the exterior body 32. The exterior body 32 and the lid body 34 are welded to be sealed by laser welding or the like. As a material of the battery case 30, aluminum, an aluminum alloy, resin, or the like is used, for example.

In the illustrated example, the battery case 30 is square in shape. The shape of the battery case 30 is, however, not limited to this shape and may be a cylindrical shape, for example. Alternatively, the battery case 30 may be a laminate case including, for example, a gas barrier layer such as an aluminum layer and a sealant layer including a thermoplastic resin.

The battery case 30 includes a positive electrode terminal 42 and a negative electrode terminal 44 for external connection. **In** addition, the battery case 30 includes a safe valve 36 that is set to, when the internal pressure of the battery case 30 has risen to or above a predetermined level, release the internal pressure. The battery case 30 includes an injection port (not illustrated) for injecting a nonaqueous electrolyte. The positive electrode terminal 42 is electrically connected to a positive electrode current collection plate 42a. The negative electrode terminal 44 is electrically connected to a negative electrode current collection plate 44a.

As illustrated in FIG. 2 and FIG. 3, the electrode body 20 is in a form in which a positive electrode sheet 50 in an elongated shape and a negative electrode sheet 60 in an elongated shape are overlapped on each other with two elongated separator sheets 70 interposed therebetween and wound in a longitudinal direction. Therefore, in this embodiment, the electrode body 20 is a wound electrode body. The electrode body 20 is, however, not limited to this and may be a stacked-type electrode body in which a plurality of positive electrodes and a plurality of negative electrodes are stacked alternately through a separator.

As illustrated in FIG. 3 and FIG. 4, in the negative electrode sheet 60, a negative electrode active material layer 64 is formed along the longitudinal direction on one surface or both surfaces (here, both surfaces) of a negative electrode current collector 62. The negative electrode sheet 60 includes a negative electrode active material layer non-formation part 62a, which is a part where the negative electrode active material layer 64 is not formed and the negative electrode current collector 62 is exposed. To the negative electrode active material layer non-formation part 62a, the negative electrode current collection plate 44a is joined.

Examples of the negative electrode current collector 62 of the negative electrode sheet 60 include a copper foil. The negative electrode active material layer 64 contains the carbon-based negative electrode active material containing Li. The negative electrode active material layer 64 can include a component other than the carbon-based negative electrode active material, such as a binder (for example, styrene butadiene rubber (SBR) or the like) or a thickener (for example, carboxymethyl cellulose (CMC) or the like).

The content of the carbon-based negative electrode active material in the negative electrode active material layer 64 is desirably 90 mass% or more, and more desirably 95 mass% or more and 99 mass% or less. The content of the binder in the negative electrode active material layer 64 is desirably 0.1 mass% or more and 8 mass% or less, and more desirably 0.5 mass% or more and 3 mass% or less. The content of the thickener in the negative electrode active material layer 64 is desirably 0.3 mass% or more and 3 mass% or less, and more desirably 0.5 mass% or more and 2 mass% or less.

In the positive electrode sheet 50, a positive electrode active material layer 54 is formed along the longitudinal direction on one surface or both surfaces (here, both surfaces) of a positive electrode current collector 52. The positive electrode sheet 50 includes a positive electrode active material layer non-formation part 52a, which is a part where the positive electrode active material layer 54 is not formed and the positive electrode current collector 52 is exposed. To the positive electrode active material layer non-formation part 52a, the positive electrode current collection plate 42a is joined.

Examples of the positive electrode current collector 52 of the positive electrode sheet 50 include an aluminum foil and the like. The positive electrode active material layer 54 contains a positive electrode active material. Examples of the positive electrode active material include lithium metal composite oxides, lithium transition metal phosphate compounds, and the like. The positive electrode active material layer 54 may include a conductive material (for example, carbon black, carbon nanotube, or the like), a binder (for example, polyvinylidene fluoride (PVDF) or the like), or the like.

Examples of the separator 70 include porous resin sheets of polyethylene, polypropylene, or the like. Such porous sheets may have a single-layer structure or a multilayer structure. The separator 70 may have a heat resistance layer (HRL) provided on a surface thereof.

The nonaqueous electrolyte 80 typically contains a nonaqueous solvent and a supporting salt (in other words, electrolyte salt). Examples of the nonaqueous solvent include carbonates (for example, EC, ethyl methyl carbonate, dimethyl carbonate, and the like), esters, ethers, and the like. Examples of the supporting salt include a lithium salt such as LiPF₆ and the like. The concentration of the supporting salt is not limited in particular, and is desirably 0.7 mol/L to 1.3 mol/L. The nonaqueous electrolyte 80 may contain various kinds of additives such as a gas generator and a film forming agent. It should be noted that although the nonaqueous electrolyte is used as the electrolyte in this embodiment, the electrolyte may be a solid electrolyte.

The lithium ion secondary battery 100 is desirably used for vehicles (that is, for a driving power source of a vehicle such as a battery electric vehicle (BEV), a hybrid electric vehicle (HEV), or a plug-in hybrid vehicle (PHEV)); however, the application of the lithium ion secondary battery 100 is not limited to this. The lithium ion secondary battery 100 may be used for a power source of an electronic appliance or the like.

### (First embodiment)

In the first embodiment, the used lithium ion secondary battery 100 is subjected to the thermal process in the first thermal process step S 101 and the thermal process in the second thermal process step S102.

In the case where the nonaqueous electrolyte 80 of the lithium ion secondary battery 100 includes EC, the carbon-based negative electrode active material and EC co-exist in the lithium ion secondary battery 100. In this case, the lithium ion secondary battery 100 can be directly subjected to the thermal process. In general, as the nonaqueous solvent of the nonaqueous electrolyte, EC, which is a cyclic carbonate, is often used in combination with a chained carbonate such as dimethyl carbonate (DMC) or ethyl methyl carbonate (EMC). DMC has a boiling point of 90°C and EMC has a boiling point of 107°C. Therefore, even when EC, and DMC and EMC are used in combination in the nonaqueous electrolyte 80, DMC and EMC evaporate prior to EC and accordingly, the reaction between EC and Li contained in the carbon-based negative electrode active material can be performed efficiently.

In the case where the nonaqueous electrolyte 80 of the lithium ion secondary battery 100 does not include EC, the nonaqueous electrolyte 80 is extracted from the lithium ion secondary battery 100 and EC is injected into the battery case 30. Thus, the carbon-based negative electrode active material and EC co-exist in the lithium ion secondary battery 100.

The lithium ion secondary battery 100 in which the carbon-based negative electrode active material and EC co-exist is subjected to the thermal process. Specifically, for example, the lithium ion secondary battery 100 is placed in a heating device such as a constant-temperature drier, a heater, or an electric furnace and heated at a temperature less than the boiling point of EC so that lithium ethylene dicarbonate is generated by the reaction expressed by Formula (I) above. Thus, the first thermal process step S 101 can be performed.

After that, the thermal process in the second thermal process step S102 can be performed by changing the temperature setting of the heating device to the temperature more than or equal to the boiling point of EC. It should be noted that, after the first thermal process step S 101 is performed, the thermally processed object may be taken out from the heating device and transferred to another heating device and then, the thermal process in the second thermal process step S 102 may be performed.

### (Second embodiment)

**In** the second embodiment, the negative electrode 60 collected from the used lithium ion secondary battery 100 is subjected to the thermal process in the first thermal process step S 101 and the thermal process in the second thermal process step S102.

Therefore, in the second embodiment, first, the negative electrode 60 is taken out from the used lithium ion secondary battery 100. This operation can be performed in accordance with a known method. In a specific example, the battery case 30 of the lithium ion secondary battery 100 is opened to expose the electrode body 20. The battery case 30 can be opened in such a way that, for example, a part of the exterior body 32 that is a little lower than the lid body 34 is cut using a tool with a cutting blade (for example, a sawing machine or the like), an electric cutting tool (for example, a grinder, a Leutor, or the like), or a cutter such as a water cutter or a laser cutter.

Before the used lithium ion secondary battery 100 is disassembled, the used lithium ion secondary battery 100 may be discharged. Thus, the amount of Li contained in the carbon-based negative electrode active material can be reduced and disassembling can be performed more safely.

Next, the exposed electrode body 20 is taken out and the negative electrode 60 is retrieved from the electrode body 20. For example, first, the positive electrode active material layer non-formation part 52a and the negative electrode active material layer non-formation part 62a of the electrode body 20 are detached from the positive electrode current collection plate 42a and the negative electrode current collection plate 44a, respectively. Next, in the case where the electrode body 20 is the wound electrode body as illustrated in the drawing, for example, the wound electrode body 20 is unfastened and separated into the positive electrode 50, the negative electrode 60, and the separator 70. In the case where the electrode body 20 is the stacked-type electrode body, the electrode body 20 is sorted into the positive electrode 50 and the separator 70, and the negative electrode 60.

Here, in a case where the nonaqueous electrolyte 80 includes EC and the nonaqueous electrolyte 80 adheres to the negative electrode 60, the carbon-based negative electrode active material and EC co-exist in the negative electrode 60.

In a case where the nonaqueous electrolyte 80 does not include EC, the carbon-based negative electrode active material included in the negative electrode active material layer 64 of the negative electrode 60 is brought into contact with EC. In a specific example, the negative electrode 60 is immersed in EC and retrieved. In another example, EC is applied on the negative electrode active material layer 64 by spraying or the like. In this manner, EC and the carbon-based negative electrode active material included in the negative electrode active material layer 64 co-exist.

The negative electrode 60 in which the carbon-based negative electrode active material and EC co-exist is placed in a heating device such as a constant-temperature drier, a heater, or an electric furnace and heated at a temperature less than the boiling point of EC so that lithium ethylene dicarbonate is generated by the reaction expressed by Formula (I) above. Thus, the first thermal process step S 101 can be performed.

After that, the thermal process in the second thermal process step S102 can be performed by changing the temperature setting of the heating device to the temperature more than or equal to the boiling point of EC. It should be noted that, after the first thermal process step S 101 is performed, the thermally processed object may be taken out from the heating device and transferred to another heating device and then, the thermal process in the second thermal process step S 102 may be performed.

### (Third embodiment)

In the third embodiment, the carbon-based negative electrode active material collected from the used lithium ion secondary battery 100 is subjected to the thermal process in the first thermal process step S 101 and the thermal process in the second thermal process step S102.

Therefore, first, the negative electrode 60 is taken out from the lithium ion secondary battery 100 in accordance with the same procedure as that in the second embodiment. The carbon-based negative electrode active material is retrieved from the negative electrode active material layer 64 of the negative electrode 60 which has been taken out. This operation can be performed in accordance with a known method. In a specific example, the negative electrode active material layer 64 is peeled off from the negative electrode 60 and the binder and the thickener included in the negative electrode active material layer 64 are removed using a solvent or the like. For example, in a case where CMC is used as the thickener, the negative electrode active material layer 64 is washed with water so that CMC is dissolved in water, whereby CMC is removed. In a case where SBR is used as the binder, the negative electrode active material layer 64 is washed with an organic solvent with a solubility parameter of 7.7 to 9.5 (for example, toluene, benzene, or the like) so that SBR is dissolved in the organic solvent, whereby SBR is removed.

The collected carbon-based negative electrode active material is brought into contact with EC. In a specific example, the carbon-based negative electrode active material is immersed in EC and retrieved. In another example, EC is applied on the carbon-based negative electrode active material by spraying or the like. In this manner, the carbon-based negative electrode active material and EC co-exist.

The carbon-based negative electrode active material co-existing with EC is placed in a heating device such as an electric furnace, a hot-air drier, or a high-temperature drier and heated at a temperature less than the boiling point of EC so that lithium ethylene dicarbonate is generated by the reaction expressed by Formula (I) above. Thus, the first thermal process step S 101 can be performed.

After that, the thermal process in the second thermal process step S 102 can be performed by changing the temperature setting of the heating device to the temperature more than or equal to the boiling point of EC. It should be noted that, after the first thermal process step S 101 is performed, the thermally processed object may be taken out from the heating device and transferred to another heating device and then, the thermal process in the second thermal process step S 102 may be performed.

In the first embodiment and the second embodiment, since EC and the carbon-based negative electrode active material co-exist in advance, it is advantageous that the nonaqueous electrolyte 80 of the lithium ion secondary battery 100 includes EC. In the manufacturing method for a recycled carbon material according to the present disclosure, it is particularly desirable that the carbon-based negative electrode active material be used together with the electrolyte solution containing EC and the first thermal process step and the second thermal process step be performed in the dry atmosphere.

By performing the thermal process in the first thermal process step S101 and the thermal process in the second thermal process step S 102 as described above in the first embodiment to the third embodiment, Li contained in the carbon-based negative electrode active material is converted into lithium carbonate. Therefore, the manufacturing method for a recycled carbon material according to the present disclosure may further include a step of removing lithium carbonate from the thermally processed object obtained in the second thermal process step S102. Here, lithium carbonate can be removed easily by water-washing from the carbon-based negative electrode active material.

Thus, the manufacturing method for a recycled carbon material according to the present disclosure desirably includes a step (lithium carbonate removing step) of removing lithium carbonate from the carbon-based negative electrode active material by washing the thermally processed object obtained by the second thermal process step S102 with water.

The lithium carbonate removing step can be performed in accordance with a known method. The water-washing may be followed by drying in accordance with a known method.

In the case of performing the lithium carbonate removing step, a step of collecting washing water generated by the water-washing and evaporating the water from the washing water to collect lithium carbonate may be further performed. This step can be performed in accordance with a known method. Lithium carbonate can be used for various purposes, and in one example, can be used as a lithium source of a lithium composite oxide used as the positive electrode active material of the lithium ion secondary battery.

In the case where the lithium ion secondary battery 100 or the negative electrode 60 is subjected to the first thermal process step S101 and the second thermal process step S 102 as described in the first embodiment or the second embodiment, the carbon-based negative electrode active material with more Li removed therefrom can be collected by, for example, the method described in the second embodiment and the third embodiment, so that the recycled carbon material can be obtained. The recycled carbon material can be used for not just the negative electrode active material but also various purposes.

As described above, in the manufacturing method for a recycled carbon material according to the present disclosure, a recycled carbon material can be easily obtained by removing more Li from the carbon-based negative electrode active material containing Li. The manufacturing method for a recycled carbon material according to the present disclosure is useful in the material recycling.

Test examples related to the present disclosure are hereinafter described in detail but these test examples are not intended to limit the present disclosure to such examples.

### [Manufacture of evaluation battery]

A used lithium ion secondary battery was prepared. This used lithium ion secondary battery had a structure in which the wound electrode body and the nonaqueous electrolyte were accommodated in the battery case made of aluminum. The positive electrode included an aluminum foil and the positive electrode active material layer, and the positive electrode active material layer contained a lithium nickel cobalt manganese composite oxide, acetylene black, and polyvinylidene fluoride at a mass ratio of 92:5:3. The negative electrode included a copper foil and the negative electrode active material layer, and the negative electrode active material layer contained graphite as the carbon-based negative electrode active material, styrene butadiene rubber, and carboxymethyl cellulose at a mass ratio of 99:0.5:0.5. The nonaqueous electrolyte contained, as the nonaqueous solvent, ethylene carbonate, dimethyl carbonate, and ethyl methyl carbonate at a volume ratio of 3:3:4, and contained LiPF₆ as the supporting salt at a concentration of about 1.1 mol/L.

After the used lithium ion secondary battery was discharged, the battery case was opened in an argon gas atmosphere. The wound electrode body was disassembled and the negative electrode was taken out. In the negative electrode active material layer of the negative electrode, the nonaqueous electrolyte permeated. Therefore, EC included in the nonaqueous electrolyte adhered to graphite.

In the argon gas atmosphere, while the nonaqueous electrolyte permeated into the negative electrode active material layer, the negative electrode was put into the constant-temperature drier. The negative electrode was subjected to the thermal process(es) under conditions shown in Table 1. After the thermal process(es), the negative electrode was washed with water and dried to remove water. However, in Comparative Example 1, the water-washing and drying were performed without the thermal process. A residue obtained by cutting a part of the negative electrode active material layer and burning carbon was prepared as a measurement sample. Using this measurement sample and a commercially-available ICP optical emission spectrometer, the content (mass%) of Li in the negative electrode active material layer was measured. The results are shown in Table 1.

### [Table 1]

**Table 1**

| | First thermal process | | Second thermal process | | Li content (mass%) |
|---|---|---|---|---|---|
| | Temperature (°C) | Time (min) | Temperature (°C) | Time (min) | |
| Comparative Example 1 | Not performed | | Not performed | | 0.80 |
| Comparative Example 2 | 80 | 60 | Not performed | | 0.80 |
| Comparative Example 3 | 110 | 60 | Not performed | | 0.50 |
| Comparative Example 4 | 140 | 60 | Not performed | | 0.50 |
| Comparative Example 5 | 170 | 60 | Not performed | | 0.50 |
| Comparative Example 6 | 200 | 60 | Not performed | | 0.40 |
| Comparative Example 7 | 110 | 60 | 200 | 60 | 0.50 |
| Comparative Example 8 | 110 | 60 | 230 | 60 | 0.40 |
| Example 1 | 110 | 60 | 260 | 60 | 0.05 |
| Example 2 | 110 | 60 | 290 | 60 | 0.05 |
| Example 3 | 110 | 60 | 320 | 60 | 0.10 |
| Example 4 | 140 | 60 | 260 | 60 | 0.05 |
| Example 5 | 170 | 60 | 260 | 60 | 0.10 |
| Example 6 | 200 | 60 | 260 | 60 | 0.20 |
| Example 7 | 110 | 40 | 260 | 40 | 0.20 |
| Example 8 | 110 | 70 | 260 | 90 | 0.05 |
| Example 9 | 110 | 100 | 260 | 120 | 0.05 |

As shown by the results in Table 1, it is understood that Li contained in the carbon-based negative electrode active material can be efficiently removed easily when the carbon-based negative electrode active material containing Li and EC are together subjected to the two-stage thermal treatment including the thermal process at the temperature less than the boiling point of EC and the thermal process at the temperature more than or equal to the boiling point of EC.

The specific examples of the present disclosure have been described above in detail; however, these are just examples and will not limit the scope of claims. The techniques described in the scope of claims include those in which the specific examples exemplified above are variously modified and changed.

That is to say, the following Items [1] to [10] are given as the manufacturing method for a recycled carbon material according to the present disclosure.
[1] The manufacturing method for a recycled carbon material, including: the first thermal process step of thermally processing the carbon-based negative electrode active material containing Li together with ethylene carbonate at the temperature less than the boiling point of ethylene carbonate to obtain the thermally processed object containing lithium ethylene dicarbonate; and the second thermal process step of thermally processing the thermally processed object at the temperature more than or equal to the boiling point of ethylene carbonate to convert lithium ethylene dicarbonate into lithium carbonate.
[2] The manufacturing method according to Item [1], in which the thermal process in the first thermal process step is performed at 90°C to 220°C for 30 minutes to 72 hours.
[3] The manufacturing method according to Item [1], in which the thermal process in the first thermal process step is performed at 110°C to 140°C for 50 minutes to 6 hours.
[4] The manufacturing method according to any one of Items [1] to [3], in which the thermal process in the second thermal process step is performed at 250°C to 350°C for 30 minutes to 72 hours.
[5] The manufacturing method according to any one of Items [1] to [3], in which the thermal process in the second thermal process step is performed at 260°C to 290°C for 50 minutes to 6 hours.
[6] The manufacturing method according to any one of Items [1] to [5], further including the step of washing the thermally processed object obtained in the second thermal process step with water to remove lithium carbonate from the carbon-based negative electrode active material.
[7] The manufacturing method according to Item [6], further including the step of collecting the washing water generated by the washing with water, and evaporating the water from the washing water to collect lithium carbonate.
[8] The manufacturing method according to any one of Items [1] to [7], in which the carbon-based negative electrode active material is used together with the nonaqueous electrolyte containing ethylene carbonate, and the first thermal process step and the second thermal process step are performed in the dry atmosphere.
[9] The manufacturing method according to any one of Items [1] to [8], in which the carbon-based negative electrode active material is graphite.
[10] The manufacturing method according to any one of Items [1] to [9], in which the carbon-based negative electrode active material is the negative electrode active material of the used lithium ion secondary battery.

## Claims

1. A manufacturing method for a recycled carbon material, comprising:
a first thermal process step (S101) of thermally processing a carbon-based negative electrode active material containing Li together with ethylene carbonate at a temperature less than a boiling point of ethylene carbonate to obtain a thermally processed object containing lithium ethylene dicarbonate; and
a second thermal process step (S102) of thermally processing the thermally processed object at a temperature more than or equal to the boiling point of ethylene carbonate to convert lithium ethylene dicarbonate into lithium carbonate.

2. The manufacturing method according to claim 1, wherein the thermal process in the first thermal process step (S101) is performed at 90°C to 220°C for 30 minutes to 72 hours.

3. The manufacturing method according to claim 1, wherein the thermal process in the first thermal process step (S101) is performed at 110°C to 140°C for 50 minutes to 6 hours.

4. The manufacturing method according to claim 1, wherein the thermal process in the second thermal process step (S102) is performed at 250°C to 350°C for 30 minutes to 72 hours.

5. The manufacturing method according to claim 1, wherein the thermal process in the second thermal process step (S102) is performed at 260°C to 290°C for 50 minutes to 6 hours.

6. The manufacturing method according to claim 1, further comprising a step of washing the thermally processed object obtained in the second thermal process step (S102) with water to remove lithium carbonate from the carbon-based negative electrode active material.

7. The manufacturing method according to claim 6, further comprising a step of collecting washing water generated by the washing with water and evaporating the water from the washing water to collect lithium carbonate.

8. The manufacturing method according to claim 1, wherein the carbon-based negative electrode active material is used together with a nonaqueous electrolyte (80) containing ethylene carbonate, and the first thermal process step (S101) and the second thermal process step (S102) are performed in a dry atmosphere.

9. The manufacturing method according to claim 1, wherein the carbon-based negative electrode active material is graphite.

10. The manufacturing method according to claim 1, wherein the carbon-based negative electrode active material is a negative electrode active material of a used lithium ion secondary battery (100).
